# EUROPÄISCHE PATENTSCHRIFT

(11) **EP 2 861 051 B1**
(45) Veröffentlichungstag und Bekanntmachung des Hinweises auf die Patenterteilung: **27.07.2016**
(21) Anmeldenummer: 13728972.4
(22) Anmeldetag: 11.06.2013
(51) Int. Cl.: A01D 41/14, A01D 45/02

(54) **ERNTEVORSATZ FÜR EINE ERNTEMASCHINE**
HARVESTING ATTACHMENT FOR A HARVESTER
ACCESSOIRE DE MOISSON POUR UNE MOISSONNEUSE

(30) Priorität: 15.06.2012 DE 102012011891
(43) Veröffentlichungstag der Anmeldung: 22.04.2015
(73) Patentinhaber: BISO Schrattenecker GmbH, 4974 Ort Im Innkreis (AT); CNH Industrial Belgium nv, 8210 Zedelgem (BE)
(72) Erfinder: SCHRATTENECKER, Franz, A-4773 Eggerding (AT)
(74) Vertreter: Zinnecker, Armin
(86) Internationale Anmeldenummer: PCT/EP2013/001709
(87) Internationale Veröffentlichungsnummer: WO 2013/185907

(56) Entgegenhaltungen:
- EP-A1- 2 266 382
- DE-A1-102010 052 816
- DE-A1-102011 008 723

## Beschreibung

Die Erfindung betrifft einen Erntevorsatz für eine Erntemaschine mit einem Rahmen, der eine Rückwand, eine Bodenwand und eine oder zwei Seitenwände umfaßt und der als Strangguß-Profil ausgebildet ist, welches Außenwände und Verstrebungswände aufweist.

Ein derartiger Erntevorsatz ist aus der DE 10 2010 052 816 A1 bekannt. Der Rahmen des Erntevorsatzes kann zur Aufnahme verschiedener Erntewerkzeuge dienen, insbesondere zur Aufnahme eines Schneidwerks. Der Erntevorsatz kann an einer Erntemaschine, insbesondere an einem Mähdrescher, befestigt sein. Er wird während des Erntebetriebs in einer Vorwärtsrichtung mittels einer landwirtschaftlichen Erntemaschine über ein Feld bewegt und dient zur Aufnahme bestimmter Erntefrüchte. Beispielsweise umfaßt der Erntevorsatz ein Schneidwerk, eine Haspel, einen Schneidbalken, Halmteiler und/oder Seitenschneider und/oder weitere benötigte Komponenten. Der Erntevorsatz ist vorzugsweise an der Frontseite einer Erntemaschine, insbesondere eines Mähdreschers, montierbar oder montiert. Er kann einen Maisadapter umfassen, wie er insbesondere bei einem Maishäcksler verwendet wird.

Aufgabe der Erfindung ist es, einen verbesserten Erntevorsatz der eingangs angegebenen Art vorzuschlagen.

Erfindungsgemäß wird diese Aufgabe durch die Merkmale des Anspruchs 1 gelöst. An einer Außenwand und/oder an einer Verstrebungswand ist mindestens ein U-förmiges Befestigungsteil angebracht, an dem die Seitenwand befestigbar oder befestigt ist.

Vorteilhafte Weiterbildungen sind in den Unteransprüchen beschrieben.

Vorteilhaft ist es, daß innerhalb der Schenkel des U-förmigen Befestigungsteils ein Distanzstück angeordnet ist.

Ein Ausführungsbeispiel der Erfindung wird nachstehend anhand der beigefügten Zeichnung im einzelnen erläutert. In der Zeichnung zeigt
- Fig. 1: einen Erntevorsatz in einer perspektivischen Ansicht von vorne,

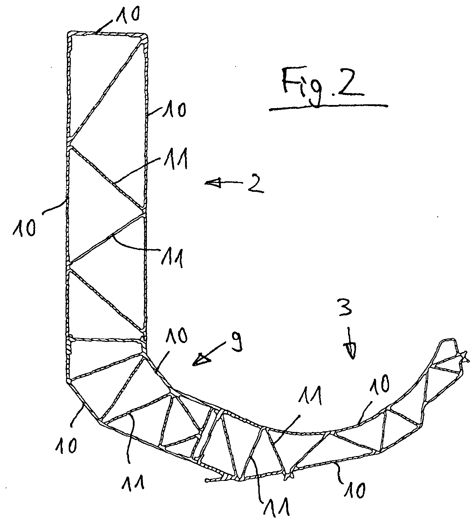

- Fig. 2: den Erntevorsatz gemäß Fig. 1 in einer Seitenansicht,

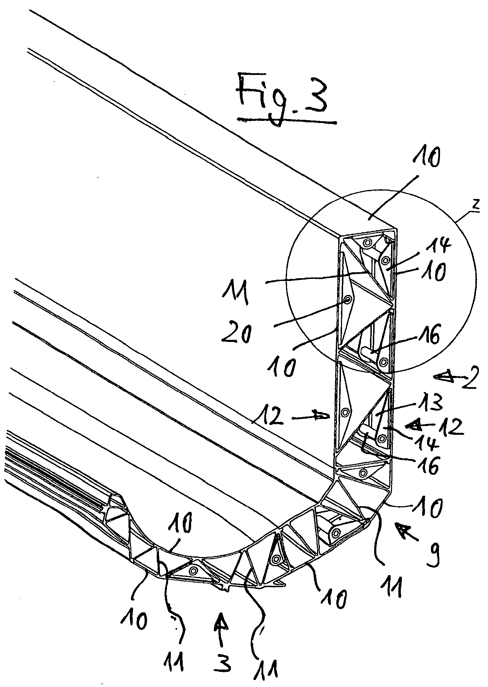

- Fig. 3: ein Ende des Erntevorsatzes gemäß Fig. 3 in einer perspektivischen Ansicht,

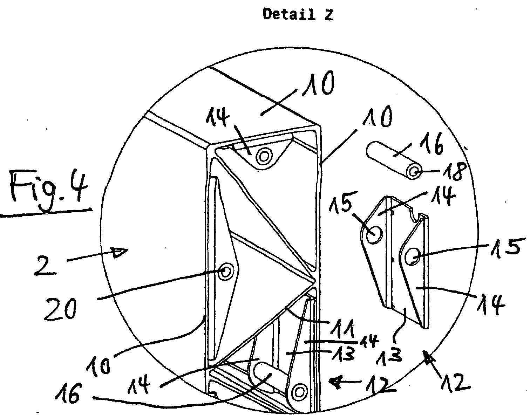

- Fig. 4: eine vergrößerte Einzelheit aus der Fig. 3 und
- Fig. 5: eine an das Ende des Erntevorsatzes montierte Seitenwand in einer perspektivischen Ansicht.

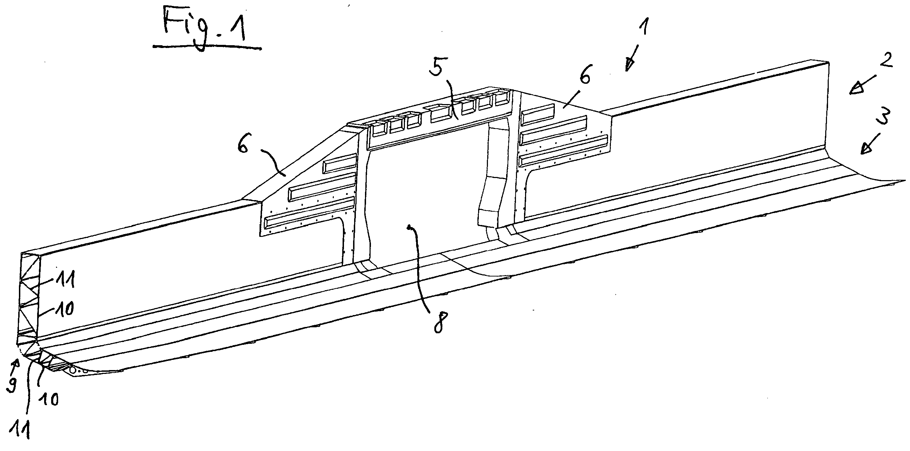

Der in Fig. 1 gezeigte Erntevorsatz für eine Erntemaschine, insbesondere für einen Mähdrescher, umfaßt einen Rahmen 1, der eine Rückwand 2 und eine Bodenwand 3 aufweist. Der Rahmen 1 weist eine L-förmige Winkelform auf. Die Rückwand 2 verläuft im wesentlichen in vertikaler Richtung, und die Bodenwand 3 verläuft im wesentlichen in horizontaler Richtung.

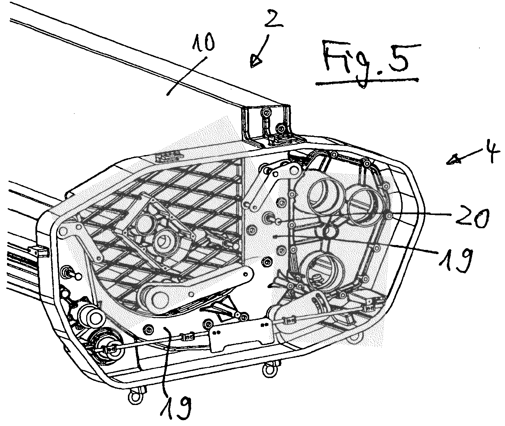

Die Längserstreckung des Rahmens 1 entspricht der Arbeitsbreite. Der Rahmen 1 weist an seinen Enden Seitenwände 4 auf (siehe Fig. 5).

In der Mitte des Rahmens 1 ist die Rückwand 2 mit einer Erhöhung 5 versehen. Die Erhöhung 5 verläuft in Verlängerung der Rückwand 2. Sie weist seitliche Abschrägungen 6 auf.

In der Mitte der Rückwand 2 ist ferner eine Durchgangsöffnung 8 vorgesehen, die beidseits von den Seitenwänden 2 sowie von der Bodenwand 3 und der Erhöhung 5 begrenzt ist. Die Durchgangsöffnung 8 kann zur Montage des Rahmens 1 an dem Erntefahrzeug dienen. Ferner kann das Erntegut durch die Durchgangsöffnung 8 von der Vorderseite des Rahmens 1 zum Erntefahrzeug gefördert werden. Zur Förderung des Ernteguts kann in dem Rahmen 1 eine Einzugsschnecke vorhanden sein (in der Zeichnung nicht dargestellt).

Der Rahmen 1 ist als Strangguß-Profil ausgebildet. Es handelt sich um ein Leichtmetall-Strangguß-Profil aus Aluminium oder aus einem Werkstoff, der Aluminium enthält.

Zwischen der Rückwand 2 und der Bodenwand 3 ist eine gekrümmte Verbindungswand 9 vorhanden. Durch die Verbindungswand 9 sind die Rückwand 2 und die Bodenwand 3 miteinander verbunden.

Der Rahmen 1, nämlich die Rückwand 2, die Bodenwand 3 und die Verbindungswand 9 weisen Außenwände 10 und Verstrebungwände 11 auf. Die Außenwände 10 verlaufen teilweise im Abstand voneinander. Sie verlaufen ferner teilweise parallel zueinander. Die Verstrebungwände 11 sind mit den Außenwänden 10 verbunden. Die Verstrebungswände 11 verlaufen teilweise senkrecht zu den Außenwänden 10 und teilweise im Winkel zu den Außenwänden 10. Im Bereich der Rückwand 2 verlaufen die Verstrebungswände 11 ausschließlich im Winkel zu den Außenwänden 10, die parallel zueinander und im Abstand voneinander verlaufen.

An verschiedenen Außenwänden 10 und Verstrebungswänden 11 sind U-förmige Befestigungsteile 12 angebracht. Das U-förmige Befestigungsteil 12 umfaßt eine Basis 13 und zwei Schenkel 14, die im wesentlichen rechtwinklig von der Basis 13 abstehen und die sich auf der selben Seite der Basis 13 befinden. Die Schenkel 14 verlaufen parallel zueinander und im Abstand voneinander. Jeder Schenkel 14 weist eine Öffnung 15 auf. Die Öffnungen 15 fluchten miteinander.

Die Basis 13 des Befestigungsteils 12 ist mit einer Außenwand 10 oder mit einer Verstrebungswand 11 verbunden. Die Basis 13 kann mit der zugehörigen Außenwand 10 oder Verstrebungswand 11 lösbar oder unlösbar verbunden sein. Vorteilhaft ist es, wenn die Basis 13 mit einer Außenwand 10 oder der Verstrebungswand 11 unlösbar verbunden ist. Die Basis 13 ist vorzugsweise mit der Außenwand 10 oder der Verstrebungswand 11 vernietet.

Im montierten Zustand weisen die Schenkel 14 von der Außenwand 10 in das Innere des Strangguß-Profils.

Zwischen den Schenkeln 14 des Befestigungsteils 12 ist ein Distanzstück 16 angeordnet. Das Distanzstück 16 ist als Distanzhülse ausgebildet. Es weist eine Durchgangsöffnung 18 auf. Im montierten Zustand fluchtet die Durchgangsöffnung 18 des Distanzstücks 16 mit den Öffnungen 15 in den Schenkeln 14 des Befestigungsteils 12. In der Durchgangsöffnung 18 des Distanzstücks 16 kann ein Gewinde vorhanden sein.

Sie Seitenwand 4 weist eine Befestigungsplatte 19 auf, die auf der Endfläche des Strangguß-Profils des Rahmens 1 aufliegt. Die Befestigungsplatte kann mit dieser Endfläche kongruent sein. Sie weist Öffnungen auf, die mit den Öffnungen 15 in den Schenkeln 14 der Befestigungsteile 12 fluchten.

Zur Montage der Seitenwand 4 wird diese Seitenplatte 4 derart positioniert, daß die Öffnungen ihrer Befestigungsplatte 19 mit den Öffnungen 15 in den Schenkeln 14 der Befestigungsteile 12 fluchten. In dieser Position können Befestigungsbolzen 20 eingeschoben werden, die die Öffnungen in der Befestigungsplatte 19, in den Schenkeln 14 und in den Distanzstücken 16 durchgreifen. Die Befestigungsbolzen 20 können mit Gewinden in den Durchgangsöffnungen 18 der Distanzstücke 16 verschraubt werden. Sie können allerdings auch mit Muttern verschraubt werden, die an den hinteren Flächen der hinteren Schenkel 14 der Befestigungsteile 12 anliegen.

Zur Befestigung der Seitenwand 4 werden Befestigungsteile 12 in einer ausreichendne Anzahl und Position mit den Außenwänden 10 und den Verstrebungswänden 11 verbunden.

## Patentansprüche

1. Erntevorsatz für eine Erntemaschine mit einem Rahmen (1), der eine Rückwand (2), eine Bodenwand (3) und eine Seitenwand (4) umfaßt und der als Strangguß-Profil ausgebildet ist, welches Außenwände (10) und Verstrebungswände (11) aufweist,
**dadurch gekennzeichnet,**
**daß** an einer Außenwand (10) und/oder an einer Verstrebungswand (11) ein U-förmiges Befestigungsteil (12) angebracht ist, an dem die Seitenwand (4) befestigbar oder befestigt ist.

2. Erntevorsatz nach Anspruch 1, **dadurch gekennzeichnet, daß** innerhalb der Schenkel (14) des U-förmigen Befestigungsteils (12) ein Distanzstück (16) angeordnet ist.

## Claims

1. A header for a harvesting machine that includes a frame (1) comprising a rear wall (2), a bottom wall (3) and a side wall (4) and that is formed as an extrusion profile that includes outer walls (10) and bracings walls (11),
**characterized in that** a U-shaped fixation part is disposed on an outer wall (10) and/or a bracing wall (11), to which fixation part the side wall (4) is fixed or can be fixed.

2. A header according to claim 1, **characterized in that** a spacer part (16) is arranged inside the lateral flank (14) of the U-shaped fixation part (12).

## Revendications

1. Tête de récolte pour une machine de récolte, qui comporte un cadre (1) comprenant une paroi arrière, (2), une paroi de fond (3) et une paroi latérale (4) et conçu sous forme de profilé obtenu par extrusion, qui comporte des parois extérieures (10) et des parois d'entretoisement (11),
**caractérisée en ce qu'**une partie de fixation en forme de U est disposée sur une paroi extérieure (10) et/ou sur une paroi d'entretoisement (11), à laquelle la paroi latérale (4) est ou peut être fixée.

2. Tête de récolte selon la revendication 1, **caractérisée en ce qu'**une pièce d'écartement (16) est disposée à l'intérieur du flanc latéral (14) de la partie de fixation en forme de U (12).
